# FASCICULE DE BREVET EUROPEEN

(11) **EP 2 524 871 B1**
(45) Date de publication et mention de la délivrance du brevet: **23.08.2017**
(21) Numéro de dépôt: 12168042.5
(22) Date de dépôt: 15.05.2012
(51) Int. Cl.: B64D 37/02, B64D 41/00

(54) **SYSTÈME AUTONOME DE GÉNÉRATION DE PUISSANCE ÉLECTRIQUE POUR AÉRONEF ET MÉTHODE DE GESTION ASSOCIÉ**
AUTONOMES SYSTEM ZUR STROMERZEUGUNG FÜR LUFTFAHRZEUG UND ENTSPRECHENDE STEUERUNGSMETHODE
AUTONOMOUS ELECTRIC POWER GENERATION SYSTEM FOR AIRCRAFT AND RELATED CONTROL METHOD

(30) Priorité: 18.05.2011 FR 1101512
(43) Date de publication de la demande: 21.11.2012
(73) Titulaire: Dassault Aviation, 75008 Paris (FR)
(72) Inventeur: Loison, Renaud, 75010 Paris (FR)
(74) Mandataire: Lavoix

(56) Documents cités:
- WO-A1-99/12810
- US-A- 5 321 945
- US-A1- 2003 218 098

## Description

La présente invention concerne un système autonome de génération de puissance électrique pour un aéronef, selon le préambule de la revendication 1.

Un tel système est destiné à être utilisé notamment sur un aéronef civil, tel qu'un avion de transport de passagers et/ou de fret, ou encore sur tout autre objet volant.

De manière connue, le carburant destiné à la propulsion des moteurs d'un aéronef est contenu dans un ou plusieurs réservoirs principaux repartis dans l'aéronef et raccordés entre eux par des systèmes de transfert de ce carburant. Chacun des réservoirs principaux est en outre raccordé à chaque moteur de l'aéronef pour distribuer le combustible présent dans le réservoir permettant au moteur de propulser l'aéronef.

Le ou les moteurs sont généralement munis de systèmes de génération de puissance électrique qui permettent d'alimenter électriquement les différents équipements et systèmes composant l'aéronef.

Toutefois, en cas de panne de génération de puissance électrique principale, par exemple en cas de panne totale des moteurs, il est nécessaire qu'une quantité minimale de puissance électrique soit engendrée dans l'appareil, afin de conserver des fonctionnalités critiques pour ramener l'appareil au sol. Ces fonctionnalités sont par exemple la commande des calculateurs et l'alimentation des instruments nécessaires au pilotage de l'appareil vers le sol.

Dans le cas d'une panne de génération de puissance électrique principale, le combustible contenu dans les réservoirs principaux est susceptible d'être mis en cause, notamment si ce combustible a été contaminé ou ne présente pas une qualité adéquate pour permettre sa combustion dans les moteurs.

Par suite, pour des raisons d'élimination des causes de pannes, les aéronefs de l'état de la technique doivent disposer d'une source de puissance électrique indépendante du combustible présent dans le réservoir principal pour pallier la défaillance de ce combustible.

Dans ce cadre, les normes actuelles sur les aéronefs civils imposent que l'aéronef dispose d'un dispositif de production d'énergie de secours avec une éolienne de secours, désignée par le terme anglais « Run Air Turbine » ou « RAT ». Un tel dispositif est relié à une pompe hydraulique ou/et à un alternateur. Elle constitue une source d'énergie de secours sur un aéronef, qui est totalement indépendante du carburant porté par l'aéronef.

L'éolienne est dimensionnée pour produire les besoins d'extrêmes secours de l'aéronef.

Cette éolienne est escamotée en fonctionnement normal. Elle se déploie à partir de la carlingue lors d'une perte totale de génération électrique principale.

La fiabilité d'un tel système auxiliaire de secours peut être augmentée au maximum, mais reste dépendante de la fiabilité mécanique du système de déploiement.

Le document US 5,321,945 décrit un dispositif de stockage de combustible associé à un système de génération de puissance auxiliaire pour un aéronef.

Un but de l'invention est d'obtenir un dispositif de stockage de carburant dans l'aéronef qui augmente la fiabilité du système de secours de l'aéronef, notamment lors d'un évènement nécessitant d'engendrer une puissance électrique de secours.

A cet effet, l'invention a pour objet un système selon la revendication 1.

Le système selon l'invention peut comprendre l'une ou plusieurs des caractéristiques des revendications 2 à 10. L'invention a également pour objet une méthode de gestion du combustible dans un aéronef selon la revendication 11. La méthode selon l'invention peut comprendre l'une ou plusieurs des caractéristiques des revendications 12 à 14. L'invention sera mieux comprise à la lecture de la description qui va suivre, donnée uniquement à titre d'exemple, et faite en se référant aux dessins annexés, sur lesquels :
- la Figure 1 est un schéma synoptique fonctionnel d'un premier aéronef selon l'invention, muni d'un système autonome de génération de puissance et de conditionnement, alimenté par un dispositif de stockage de combustible selon l'invention ;
- la Figure 2 est un schéma synoptique fonctionnel du dispositif de stockage de combustible selon l'invention ;
- la Figure 3 est un schéma synoptique fonctionnel représentant l'ensemble autonome de génération dans une première phase de fonctionnement au sol ;
- la Figure 4 est une vue analogue à la Figure 3 lors d'une deuxième phase de fonctionnement au sol ;
- la Figure 5 est une vue analogue à la Figure 3 lors de l'allumage du moteur ;
- la Figure 6 est une vue analogue à la Figure 3 lors d'un vol en conditions normales de l'aéronef ;
- la Figure 7 est une vue analogue à la Figure 6 lors du redémarrage d'un moteur ;
- la Figure 8 est une vue analogue à la Figure 7 lors d'une extinction des moteurs ;
- la Figure 9 est une vue analogue à la Figure 3 lors d'opérations de maintenance ;
- la Figure 10 est une vue partielle en perspective de la partie arrière d'un aéronef selon l'invention ;
- la Figure 11 est une vue analogue à la Figure 1 d'un deuxième aéronef selon l'invention ;
- la Figure 12 est une vue analogue à la Figure 1 d'un troisième aéronef selon l'invention ;
- la Figure 13 est une vue analogue à la Figure 1 d'un quatrième aéronef selon l'invention ;
- la Figure 14 est une vue d'une variante d'ensemble de fourniture d'air extérieur pour le système autonome de génération d'énergie.

Dans tout ce qui suit, les termes « amont » et « aval » s'entendent généralement par rapport au sens normal de circulation d'un fluide.

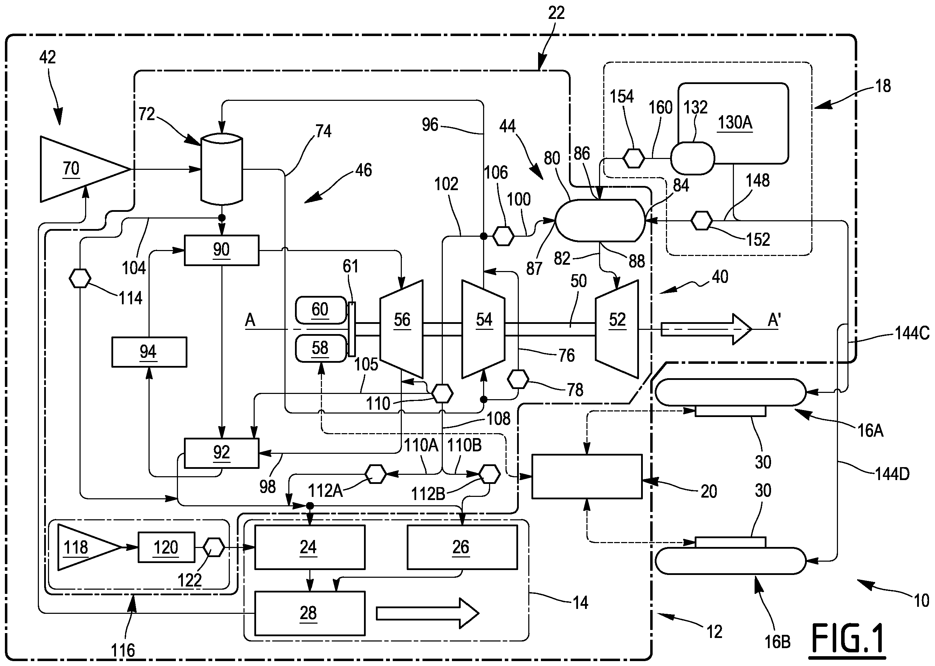

Un premier aéronef 10 selon l'invention est illustré schématiquement par la Figure 1.

De manière connue, cet aéronef 10 comporte un fuselage 12 délimitant une enceinte 14 destinée à être conditionnée, notamment en température et en pression.

L'aéronef 10 comporte au moins un moteur 16A, 16B, un dispositif 18 de stockage de combustible, un réseau électrique 20, et un système autonome 22 de génération électrique et de conditionnement.

L'enceinte 14 comporte une cabine 24 destinée à transporter des passagers et/ou des marchandises, un cockpit 26, destiné à transporter un équipage pilotant l'aéronef 10 et une soute 28 destinée à transporter des bagages et/ou des marchandises et/ou des équipements fonctionnels de l'aéronef.

Les passagers, les bagages, les marchandises et/ou les équipements fonctionnels doivent en effet être transportés dans des conditions définies de température, de pression et d'hygrométrie.

Le gaz présent dans l'enceinte 14 est conditionné par le système autonome 22 pour présenter une température et une pression commandée, indépendante de la température et de la pression régnant à l'extérieur de l'aéronef 10.

Généralement, la température du gaz présent dans l'enceinte 14 est maintenue en consigne usuellement comprise entre 15°C et 60°C en fonction de la zone de l'aéronef à conditionner. De même, la pression du gaz dans l'enceinte 14 est maintenue entre la pression statique atmosphérique située à l'extérieur de l'aéronef, et cette valeur de pression statique plus 800 millibars absolus, suivant les zones de l'avion et son altitude.

L'aéronef 10 comporte au moins un moteur 16A, 16B destiné à sa propulsion, notamment pour permettre son décollage et son maintien en vol.

Dans l'exemple représenté sur la Figure 1, l'aéronef 10 comporte deux moteurs 16A, 16B, le nombre de moteurs 16A, 16B pouvant être compris plus généralement entre 1 et 4.

Dans cet exemple, chaque moteur 16A, 16B est un turbo-réacteur comprenant une turbine entraînée en rotation par la combustion d'un combustible liquide (tel que du kérosène) pour engendrer une poussée.

Chaque moteur 16A, 16B est équipé d'un élément 30. Dans le cas d'un moteur à démarrage électrique, cet élément est un alterno démarreur de génération principale qui, lorsqu'il est alimenté électriquement, est apte à entraîner en rotation le moteur pour assurer son démarrage. Dans le cas d'un moteur à démarrage à air, cet élément 30 est un générateur. Dans les deux cas cet élément est monté rotatif conjointement avec la turbine pour engendrer une puissance électrique transmise au réseau électrique 20 lorsque le moteur 16A, 16B est actif.

Le réseau électrique 20 est destiné à alimenter électriquement les ensembles fonctionnels de l'aéronef 10.

Le réseau électrique 20 alimente notamment un calculateur, notamment de commande de vol, des pompes, des instruments de navigation et des servitudes présents dans le cockpit 26 et dans la cabine 24.

Comme illustré par la Figure 1, le système autonome 22 forme un module de puissance autonome, apte à engendrer une puissance électrique, indépendamment des éléments 30 (alterno démarreurs ou générateurs), par exemple lorsque les moteurs 16A, 16B sont à l'arrêt.

Le système autonome 22 est en outre destiné à conditionner le gaz présent dans l'enceinte 14, notamment en fournissant un gaz comprimé refroidi.

Comme illustré par la Figure 1, le système autonome 22 comporte un ensemble rotatif 40, un ensemble amont 42 de fourniture d'air extérieur à l'ensemble rotatif 40, un ensemble de combustion 44 pour l'entraînement en rotation de l'ensemble rotatif 40 et un ensemble aval 46 de conditionnement de gaz.

L'ensemble rotatif 40 comporte un arbre rotatif 50 unique. Il comporte en outre une turbine de puissance 52, un compresseur 54 et une turbine froide 56 montés sur l'arbre rotatif 50.

L'ensemble rotatif 40 comporte de plus un alternateur principal 58 et avantageusement, un alternateur auxiliaire 60, les alternateurs 58, 60 étant raccordés mécaniquement à l'arbre rotatif 50 par un organe de transmission 61 du mouvement rotatif de l'arbre.

L'organe de transmission 61 est par exemple un modificateur de vitesse de rotation propre à entraîner chaque alternateur 58, 60 à une vitesse de rotation distincte de celle de l'arbre 50, tel qu'un réducteur.

En variante, au moins un alternateur 58, 60 est porté directement sur l'arbre 50.

Comme on le verra en détail plus bas, l'ensemble rotatif 40 est destiné à être entraîné en rotation autour d'un axe d'arbre A-A' par la turbine de puissance 52. Cet entraînement en rotation provoque la rotation conjointe du compresseur 54, de la turbine froide 56, de l'alternateur principal 58, et de l'alternateur auxiliaire 60, par l'intermédiaire de l'organe de transmission 61, lorsqu'il est présent.

Selon l'invention, l'ensemble amont 42 de fourniture d'air extérieur est destiné à alimenter le compresseur 54 en air extérieur à l'aéronef 10 n'ayant pas transité par un moteur 16A, 16B de propulsion de l'aéronef 10.

Dans cet exemple, l'ensemble de fourniture 42 comporte une prise d'air extérieur 70, un échangeur thermique amont 72 et une conduite amont 74 d'amenée d'air extérieur raccordant la prise d'air extérieur 70 à une entrée du compresseur 54, à travers l'échangeur amont 72.

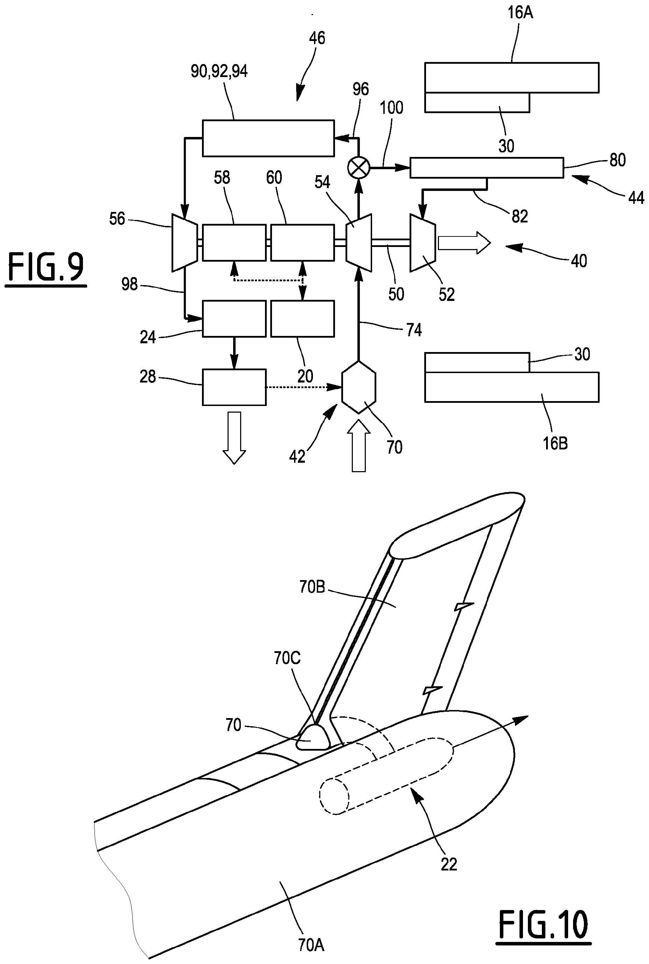

Comme illustré par la Figure 10, la prise d'air extérieur 70 est par exemple aménagée dans le fuselage 70A (figure 10) de l'aéronef 10 pour prélever de l'air extérieur à l'aéronef 10.

Cette prise peut être située en particulier à la base de la dérive 70B disposée à l'arrière du fuselage, par exemple dans une tuyère 70C.

En variante, (non représentée) la prise 70 est une écope faisant saillie par rapport au fuselage

Selon l'invention, la prise d'air 70 est disposée à l'écart du ou de chaque moteur 16A, 16B. Elle est dépourvue de moyens d'injection de combustible. L'air extérieur prélevé par la prise 70 n'entre pas en contact avec du combustible destiné à la propulsion de l'aéronef 10.

Le dimensionnement de la prise d'air 70 est adapté à la taille du compresseur 54 et est indépendant de la quantité d'air présente dans le ou chaque moteur 16A, 16B pour assurer la propulsion de l'aéronef.

De plus, l'air extérieur capté au niveau de la prise 70 n'est pas utilisé pour engendrer une force de poussée sur l'aéronef.

Sur la Figure 1, une première conduite de dérivation 76 d'air extérieur est piquée sur la conduite d'amenée d'air 74 en aval de l'échangeur 72, et en amont du compresseur 54, pour fournir de l'air extérieur prélevé par la prise d'air 70 en aval du compresseur 54, sans passer par celui-ci.

La première conduite de dérivation 76 est munie d'une vanne 78 de dérivation du compresseur 54.

La conduite 76 est destinée à s'opposer au phénomène de pompage dans le compresseur 54.

L'ensemble de combustion 44 comporte une chambre de combustion 80 destinée à produire un gaz de combustion présentant une enthalpie augmentée, et un canal 82 d'alimentation de la turbine de puissance 52 en gaz de combustion.

La chambre de combustion 80 est destinée à recevoir du combustible provenant du dispositif de stockage 18 soit à travers une entrée principale 84, soit à travers une entrée secondaire 86, comme on le verra plus bas. L'entrée principale 84 et l'entrée secondaire 86 sont situées à l'écart l'une de l'autre, comme on le verra plus bas.

La chambre 80 présente une entrée 87 d'amenée d'air comprimé provenant du compresseur 54 et une sortie 88 de gaz de combustion sur laquelle est raccordé le canal d'alimentation 82.

La chambre 80 est apte à recevoir du combustible provenant du dispositif de stockage 18, à effectuer sa combustion en présence d'air comprimé reçu par l'entrée d'amenée d'air 87, pour produire un gaz de combustion évacué par la sortie 88 de gaz de combustion.

La chambre de combustion 80 est par contre inapte à engendrer un gaz de propulsion de l'aéronef 10. Elle ne forme pas un moteur de l'aéronef et est indépendante du ou des moteurs 16A, 16B de l'aéronef 10.

En particulier, les gaz de combustion produits dans la chambre de combustion 80 ne sont pas destinés, ni aptes à entraîner en rotation une turbine d'un moteur de propulsion 16A, 16B.

L'ensemble aval 46 de conditionnement comporte dans cet exemple un échangeur thermique aval 90, un condenseur 92, un séparateur 94, et une conduite 96 de convoyage du gaz comprimé dans le compresseur 54 vers la turbine froide 56. La conduite de convoyage 96 passe successivement à travers l'échangeur thermique amont 72, l'échangeur thermique aval 90, le condenseur 92, le séparateur 94, puis à nouveau à travers le réchauffeur 90, avant d'atteindre la turbine froide 56.

L'ensemble aval 46 comporte en outre une conduite 98 de distribution de gaz froid détendu, raccordant une sortie de la turbine 56 à l'enceinte 14, à travers le condenseur 92.

L'ensemble aval 46 comporte de plus une conduite de dérivation 100 d'air comprimé pour l'alimentation de la chambre de combustion 80.

Sur la Figure 1, l'ensemble aval 46 comporte une conduite 102 de dérivation directe d'air comprimé issu du compresseur 54 vers l'enceinte 14, et une conduite 104 de dérivation de gaz comprimé issu de l'échangeur 72, vers l'enceinte 14.

L'ensemble aval 46 comporte en outre une conduite 105 de dérivation directe du gaz comprimé issu du compresseur 54 vers la turbine froide 56 et vers le condenseur 92 pour dégivrer ces éléments.

L'échangeur thermique amont 72 est apte à mettre en relation d'échange thermique le gaz comprimé issu du compresseur 54 circulant dans la conduite de convoyage 96 avec l'air extérieur prélevé dans la prise d'air 70 pour refroidir le gaz comprimé et réchauffer l'air extérieur.

L'échangeur thermique aval 90 est propre à mettre en relation d'échange thermique le gaz comprimé amont circulant dans la conduite de convoyage 96 à la sortie de l'échangeur thermique amont 72 avec le gaz comprimé aval issu du séparateur 94 circulant dans la conduite de convoyage 96, pour réchauffer le gaz comprimé aval issu du séparateur 94 et pour refroidir le gaz comprimé amont à la sortie de l'échangeur thermique 72.

Le condenseur 92 est propre à mettre en relation d'échange thermique le gaz froid détendu issu de la turbine 56 avec le gaz comprimé issu de l'échangeur thermique aval 90 pour refroidir et éventuellement partiellement condenser le gaz comprimé.

Le séparateur 94 est propre à éliminer la phase liquide du gaz comprimé partiellement condensé dans le condenseur 92 pour empêcher l'entrée de cette phase liquide dans la turbine froide 56.

La conduite de dérivation 100 d'air comprimé est piquée sur la conduite de convoyage 96 entre la sortie du compresseur 54 et l'échangeur thermique 72. Elle débouche dans la chambre de combustion 80 au niveau de l'entrée d'alimentation 87 en air comprimé. Elle est munie d'une vanne 106 de commande du débit d'air comprimé à envoyer vers la chambre de combustion 80.

La conduite de dérivation directe 102 comporte un tronçon amont commun 108 muni d'une vanne de dérivation 110 et deux tronçons aval 110A, 110B destinés à raccorder respectivement la cabine 24 et le cockpit 26. Chacun des tronçons 110A, 110B est muni d'une vanne 112A, 112B de commande du débit injecté.

La conduite de dérivation 104 de gaz comprimé est piquée en amont sur la conduite de convoyage 96 entre l'échangeur thermique amont 72 et l'échangeur thermique aval 90. Elle débouche en aval sur la conduite de distribution 98, en aval du condenseur 92. Elle est munie d'une vanne de commande 114 du débit de gaz comprimé dérivé.

Sur la Figure 1, le système autonome 22 de génération de puissance et de conditionnement, comporte en outre un ensemble auxiliaire 116 de conditionnement de secours.

Cet ensemble auxiliaire 116 comprend une prise d'air de secours 118, un réchauffeur de secours 120, et une vanne de ventilation de secours 122 qui débouche dans l'enceinte 14.

La prise d'air de secours 118 est indépendante et est distincte de la prise d'air 70. Le réchauffeur de secours 120 est indépendant de la chambre de combustion 80 et des moteurs 16A, 16B. Le réchauffeur 120 est avantageusement un réchauffeur électrique alimenté électriquement par le réseau 20.

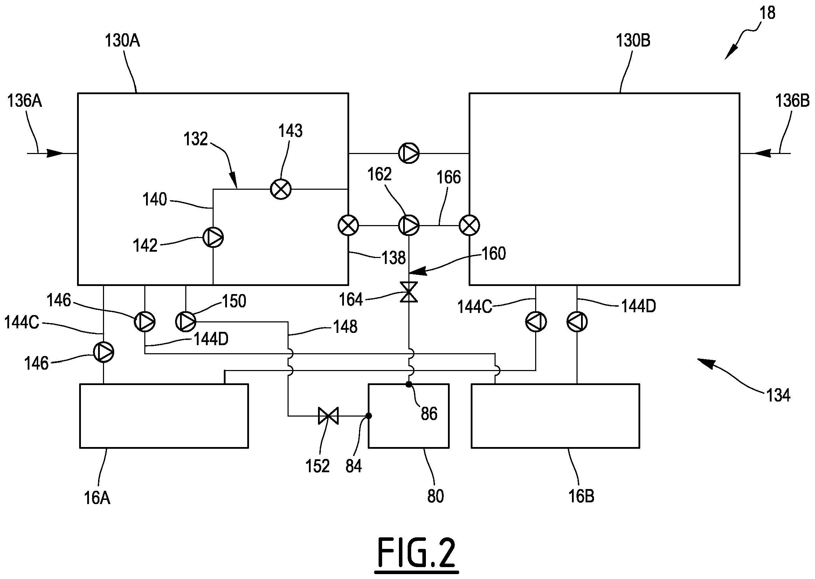

Comme illustré par la Figure 2, le dispositif 18 de stockage de combustible comporte, selon l'invention, au moins un réservoir principal 130A, 130B, au moins un réservoir auxiliaire 132 disposé dans le réservoir principal 130A, et un distributeur sélectif 134 de combustible vers le ou vers chaque moteur 16A, 16B et vers la chambre de combustion 80.

Comme illustré par la Figure 2, l'aéronef 10 comprend généralement une pluralité de réservoirs principaux 130A, 130B disposés dans les ailes ou dans le fuselage 12 de l'aéronef. Chaque réservoir principal 130A, 130B est propre à contenir un premier lot de combustible liquide destiné à alimenter le ou les moteurs 16A, 16B en vue de la propulsion de l'avion.

Chaque réservoir principal 130A, 130B est également destiné à alimenter, en mode normal de fonctionnement, la chambre de combustion 80.

Lorsque plusieurs réservoirs principaux 130A, 130B sont présents, les réservoirs 130A, 130B sont raccordés entre eux pour permettre l'équilibrage de la quantité de combustible dans les différents réservoirs 130A, 130B durant les phases de vol.

Chaque réservoir 130A, 130B est muni d'une entrée 136A, 136B d'alimentation en un premier lot de combustible frais, l'entrée 136A, 136B étant destinée au remplissage du réservoir 130A, 130B entre deux vols.

Selon l'invention, le réservoir auxiliaire 132 est destiné à contenir un deuxième lot de combustible distinct du premier lot de combustible. Le deuxième lot de combustible est par exemple formé par le premier lot de combustible utilisé lors d'un vol précédent, ou par un lot de combustible obtenu à partir d'un autre véhicule de remplissage différent de celui utilisé pour remplir le ou chaque réservoir principal 130A, 130B en combustible.

Lorsqu'un deuxième véhicule de remplissage est utilisé, le deuxième lot de combustible peut être préalablement filtré et/ou testé pour vérifier sa qualité et sa fiabilité.

Dans le mode de réalisation représenté sur la Figure 2, le réservoir auxiliaire 132 est disposé à l'intérieur du réservoir principal 130A. Il partage avantageusement au moins une paroi extérieure 138 avec le réservoir principal 130A. Le réservoir auxiliaire 132 est délimité par une paroi d'isolation 140 étanche au combustible présent dans le volume intérieur du réservoir 130A qui le contient.

Le volume du réservoir auxiliaire 132 est inférieur à 15% du volume du réservoir principal 130A.

Le réservoir principal 130A et le réservoir auxiliaire 132 sont raccordés l'un à l'autre par une pompe 142 d'échange de combustible entre le réservoir principal 130A et le réservoir auxiliaire 132.

Un clapet 143 de surpression raccorde également le réservoir auxiliaire 132 au réservoir principal 130A.

La paroi d'isolation 140 est par exemple souple et déformable pour que le réservoir auxiliaire 132 présente un volume variable en fonction de la quantité de combustible contenue dans le réservoir auxiliaire. En variante, la paroi d'isolation 140 peut être une paroi rigide, définissant un volume constant.

Le distributeur 134 comporte, pour chaque réservoir principal 130A, 130B, une conduite 144C, 144D d'alimentation raccordant le réservoir 130A, 130B à chaque moteur 16A, 16B.

Ainsi, dans l'exemple représenté sur la Figure 2, le premier réservoir principal 130A est raccordé au premier moteur 16A par une première conduite d'alimentation 144C et est raccordé au deuxième moteur 16B par une deuxième conduite d'alimentation 144D. De même, le deuxième réservoir principal 130B est relié au premier réacteur 16A par une première conduite d'alimentation 144C et au deuxième réacteur 16B par une deuxième conduite d'alimentation 144D.

Chacune des conduites 144C, 144D d'alimentation est munie de moyens de pompage 146 du premier lot de combustible.

En outre, pour permettre l'alimentation de la chambre de combustion 80, le distributeur 134 comporte au moins une première conduite 148 d'amenée de combustible dans la chambre de combustion 80 destinée à convoyer dans la chambre 80 le premier lot de combustible présent dans le réservoir principal 130A. Cette conduite 148 est munie d'une pompe 150 et d'une vanne de commande de débit 152. La première conduite 148 débouche dans la chambre de combustion 80 à travers l'entrée principale 84.

Selon l'invention, le distributeur 134 comporte en outre une deuxième conduite d'amenée 160 de combustible dans la chambre de combustion 80 destinée à convoyer le deuxième lot de combustible présent dans le réservoir auxiliaire 132.

La deuxième conduite d'amenée 160 alimente la chambre 80 exclusivement en combustible du deuxième lot présent dans le réservoir auxiliaire 132, sans être mélangé ou contaminé par le premier lot de combustible présent dans le réservoir principal 130A.

La deuxième conduite 160 est munie d'une pompe auxiliaire de secours 162 et d'une vanne de commande de débit 164. La deuxième conduite 160 débouche dans la chambre de combustion 80 à travers l'entrée secondaire 86, à l'écart de l'entrée principale 84. Ceci assure qu'une obstruction de l'entrée principale 84 n'empêche pas la distribution du deuxième lot de combustible dans la chambre de combustion 80.

Pour assurer le renouvellement du lot de carburant contenu dans le réservoir auxiliaire 132, un piquage de vidange 166 est prévu sur la deuxième conduite d'amenée 160, en aval de la pompe 162. Ce piquage de vidange 166 est par exemple dirigé vers une vidange externe de l'aéronef 10 ou vers un réservoir principal 130B.

Pour garantir que le réservoir auxiliaire 132 du dispositif de stockage 18 comporte toujours un deuxième lot de combustible distinct du premier lot, et fiable, la méthode de remplissage du dispositif 18 est la suivante.

Lors du premier remplissage des réservoirs, avant un vol de l'aéronef 10, le réservoir principal 130A, 130B est rempli d'un premier lot de combustible par l'entrée 136A, 136B.

Le réservoir secondaire 132 est rempli d'un deuxième lot de combustible provenant d'une source distincte du premier lot de combustible fourni dans le réservoir principal 130A, 130B. Ainsi, deux véhicules de remplissage de carburant distincts contenant respectivement le premier lot de combustible et le deuxième lot de combustible sont généralement utilisés. Le deuxième lot de combustible peut être préalablement filtré et/ou testé pour vérifier son intégrité et sa fiabilité.

Lors du vol, le premier lot de combustible est utilisé pour alimenter les moteurs 16A, 16B en vue de la propulsion de l'aéronef, à travers les conduites d'alimentation 144A, 144B.

Une fois l'aéronef 10 posé et avant un vol ultérieur de l'aéronef 10, une partie du premier lot de combustible présent dans le réservoir principal 130A est convoyée vers le réservoir auxiliaire 132, à travers la pompe d'échange de combustible 142, après l'évacuation du deuxième lot de combustible présent dans le réservoir auxiliaire 132 par le piquage de vidange 166.

Le premier lot de combustible ayant servi à la propulsion de l'aéronef 10 lors du vol antérieur, il est considéré comme fiable et sain. Ce combustible forme alors un deuxième lot de combustible pour le vol ultérieur, dont la fiabilité est assurée.

Puis, le réservoir principal 130A est à nouveau rempli avec un nouveau premier lot de combustible.

Cette méthode de remplissage garantit que du combustible fiable est toujours présent dans le réservoir auxiliaire 132. Ceci assure que la chambre de combustion 80 peut être alimentée de combustible fiable en cas d'urgence, comme on va le décrire plus bas.

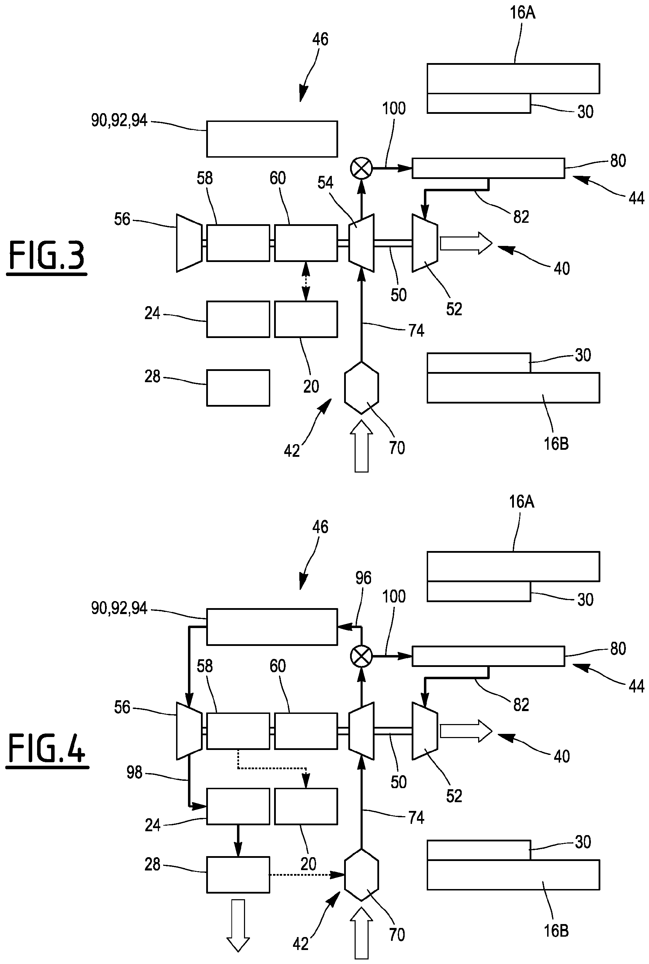

Le fonctionnement du système autonome 22 de génération de puissance et de conditionnement selon l'invention va maintenant être décrit, dans ses différentes modes d'utilisation à l'aide des Figures 3 à 10.

Initialement, dans un mode de démarrage machine, en référence à la Figure 3, l'aéronef 10 est au sol. Les moteurs 16A, 16B sont éteints.

Pour démarrer le système autonome 22, le réseau électrique de l'aéronef 20 comprenant des batteries est raccordé électriquement à l'alternateur auxiliaire 60 pour alimenter cet alternateur 60 et le faire fonctionner en moteur. La rotation de l'alternateur auxiliaire 60 permet de tester son bon fonctionnement avant chaque vol, afin de garantir qu'il sera fonctionnel en cas d'urgence, et notamment en cas de défaillance de l'alternateur principal 58.

L'entraînement en rotation de l'arbre 50 par l'alternateur auxiliaire 60 provoque la rotation du compresseur 54 et l'aspiration d'air extérieur à travers la prise d'air 70, et la conduite d'amenée d'air extérieur 74. Cet air extérieur ne transite pas par un moteur de propulsion de l'aéronef. Il est dépourvu de combustible.

La vanne 106 est alors ouverte pour permettre l'alimentation de la chambre de combustion 80 par l'air comprimé provenant du compresseur 54 à travers la conduite de dérivation 100.

Lorsque le débit d'air circulant vers la chambre de combustion 80 à travers la conduite de dérivation 100 est suffisant, du combustible provenant du réservoir principal 130A, 130B est injecté dans la chambre de combustion 80 à travers la conduite d'alimentation 148 et la vanne 152.

La chambre de combustion 80 est alors allumée pour provoquer la combustion du combustible, ce qui engendre un gaz de combustion sous pression. La pression du gaz de combustion est par exemple supérieure à 1,5 bar et sa température est supérieure à 600°C.

Ce gaz de combustion est ensuite extrait à travers le canal d'alimentation 82 et est amené jusqu'à la turbine de puissance 52.

Lorsque la turbine de puissance 52 dispose de suffisamment d'énergie pour entraîner en rotation de manière autonome l'arbre 50, l'alternateur auxiliaire 60 est désactivé.

Ceci étant fait, dans un mode de fonctionnement nominal du système 22 au sol, ou moteurs éteints, représenté sur la Figure 4, un débit continu d'air extérieur est aspiré par la prise d'air 70 et la conduite d'amenée 74. Cet air extérieur est injecté à l'entrée du compresseur 54 pour produire un gaz comprimé délivré dans la conduite de convoyage 96.

La pression du gaz comprimé issu du compresseur 54 est par exemple supérieure à 1,5 bar (au sol ou à faible altitude, moins de 15000 pieds).

Une partie du gaz comprimé issu du compresseur 54 est alors amenée jusqu'à l'échangeur thermique amont 72.

Puis, le gaz comprimé issu de l'échangeur thermique amont 72 est introduit dans l'échangeur thermique aval 90 pour y être refroidi. Le gaz comprimé issu de l'échangeur thermique aval 90 passe alors dans le condenseur 92 pour y être partiellement condensé par échange thermique avec le gaz détendu issu de la turbine froide 56 circulant dans la conduite aval 98.

Le gaz comprimé partiellement condensé pénètre alors dans le séparateur 94 où la fraction liquide qu'il contient est éliminée.

Puis, ce gaz comprimé est introduit dans l'échangeur thermique aval 90 pour s'y réchauffer par échange thermique avec le gaz comprimé issu de l'échangeur 72, avant d'être introduit dans la turbine froide 56.

Ensuite, le gaz comprimé est détendu de manière dynamique dans la turbine froide 56 pour produire un gaz détendu refroidi à une température inférieure comprise entre 3°C et 20°C. Cette température est inférieure à la température du gaz comprimé issu du compresseur 54. La pression du gaz détendu est au moins supérieure à la pression de consigne.

Le gaz refroidi détendu est ensuite passé dans le condenseur 92 à travers la conduite aval de distribution 98, avant d'être distribué dans l'enceinte 14, en particulier dans la cabine 24, dans le cockpit 26 et dans la soute 28.

A cet effet, et pour assurer la consigne en température, en pression et en hygrométrie dans la cabine 24 et dans le cockpit 26, le gaz refroidi détendu issu du condenseur 92 est mélangé à du gaz comprimé sous pression dérivé par l'intermédiaire de la conduite de dérivation directe 102. Les vannes 112A, 112B de débit sont ainsi pilotées sélectivement pour garantir une injection de gaz à une température, à une pression et à une hygrométrie commandée sélectivement dans la cabine 24 et dans le cockpit 26. Généralement, la soute 28 est alimentée par le gaz extrait hors de la cabine 24 et hors du cockpit 26.

Le conditionnement du gaz présent dans l'enceinte 14 est donc possible, même lorsque les moteurs 16A, 16B sont éteints. Le système 22 est apte à réaliser ce conditionnement de manière autonome.

Lors de la rotation de l'arbre 50, l'alternateur principal 58 fonctionne en générateur et fournit de la puissance électrique au réseau électrique 20 de l'aéronef et notamment aux batteries présentes dans ce réseau 20.

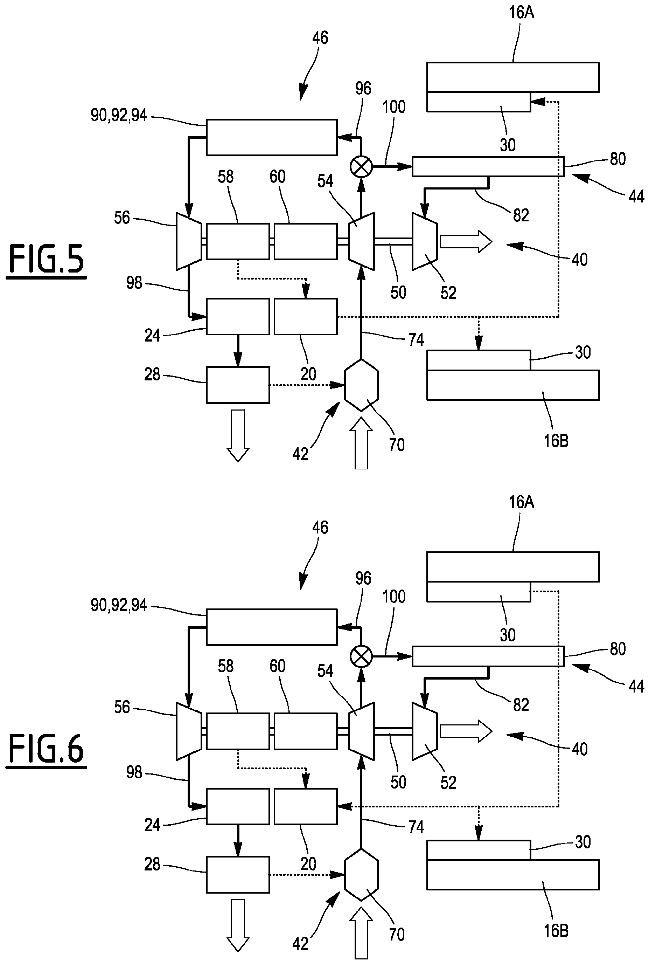

Ensuite, dans un mode de démarrage électrique des moteurs 16A, 16B, en référence à la Figure 5, le démarrage des moteurs 16A, 16B peut être effectué à l'aide des alterno démarreurs 30.

A cet effet, le réseau électrique 20 alimente électriquement chaque alterno démarreur du moteur 30 pour qu'il fonctionne en moteur et qu'il entraîne en rotation la turbine présente dans le moteur 16A, 16B.

Un débit de combustible présent dans un réservoir principal 130A, 130B est alors injecté dans le moteur 16A, 16B à travers les conduites d'amenée 144C, 144D. Le ou chaque moteur 16A, 16B est alors démarré comme cela est représenté sur la Figure 6.

Une fois le ou chaque moteur 16A, 16B démarré, l'aéronef 10 peut décoller.

Dans une variante de démarrage à l'air des moteurs 16A, 16B, du gaz comprimé issu du compresseur 54, prélevé en amont de l'échangeur thermique 72 est dérivé vers le ou chaque moteur 16A, 16B pour entraîner en rotation les turbines de ces moteurs. Le moteur 16A, 16B est alors démarré sous l'effet de cette circulation d'air sans qu'il soit nécessaire d'utiliser un alternodémarreur, le générateur 30 dans ce cas a pour unique fonction de générer du courant lorsque les moteurs sont en fonctionnement.

Un mode de fonctionnement nominal en « cogénération électrique complémentaire », lors d'une phase de vol ou dans une phase au sol moteurs allumés est représenté sur la Figure 6. Dans ce mode, les éléments 30 présents sur les moteurs 16A, 16B fonctionnent en générateur et alimentent en puissance électrique le réseau électrique 20.

De même, la chambre de combustion 80 continue à fonctionner en continu, de manière autonome par rapport aux moteurs 16A, 16B, ce qui assure le conditionnement de l'enceinte 14 comme décrit plus haut et ce qui produit une alimentation électrique complémentaire du réseau électrique 20 de l'aéronef 10, notamment lorsqu'un surcroît de puissance électrique est nécessaire.

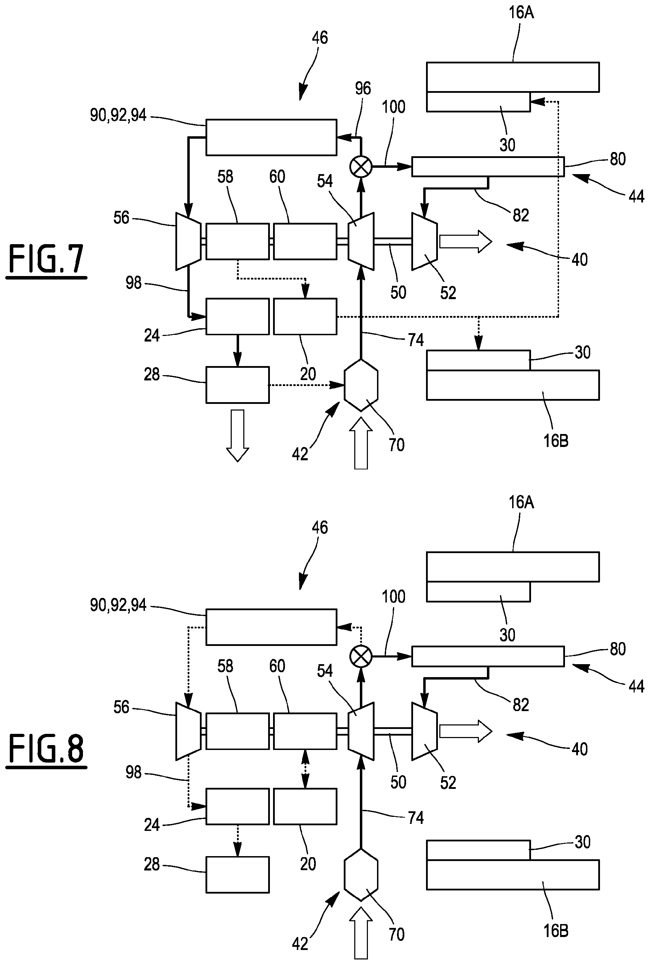

Dans un mode de redémarrage en vol représenté sur la Figure 7, où un moteur 16A, 16B s'éteint pendant le vol, le moteur 16A, 16B peut être redémarré à partir de la puissance électrique fournie par le système autonome 22 de génération selon l'invention.

Dans ce cas, l'arbre 50 est entraîné en rotation par l'alimentation de la turbine de puissance 52 en gaz de combustion provenant de la chambre 80 de combustion. L'alternateur principal 58 fonctionne alors en générateur de puissance électrique alimentant le réseau électrique 20. Dans le cas de moteurs à démarrage électrique, cette puissance électrique est utilisée pour alimenter l'alterno démarreur 30 du moteur 16A, 16B à redémarrer. L'alterno démarreur 30 fonctionne alors en moteur.

En variante, le moteur 16A, 16B est redémarré à l'air à l'aide de gaz comprimé issu du compresseur 54, comme décrit précédemment.

La Figure 8 illustre le fonctionnement du système 22 dans un mode de perte de génération électrique principale. Un tel mode se produit par exemple en cas d'extinction totale des moteurs 16A, 16B, c'est-à-dire lorsque tous les moteurs 16A, 16B de l'appareil sont inutilisables, et/ou lorsque les alterno démarreurs (en mode alternateur) ou les générateurs 30 ne fournissent plus de puissance électrique.

Lors de cette procédure d'urgence, le premier lot de combustible présent dans le réservoir principal 130A, 130B peut être considéré comme une source potentielle de panne (pollution carburant). Dans ce cas, pour garantir une alimentation électrique minimale des fonctionnalités essentielles de l'aéronef, le deuxième lot de combustible présent dans le réservoir auxiliaire 132 est utilisé.

A cet effet, le combustible présent dans le réservoir auxiliaire 132 est convoyé à travers la deuxième conduite d'alimentation 160 par l'intermédiaire de la pompe 162 et de la vanne de contrôle de débit 164 jusqu'à la chambre de combustion 80.

La chambre de combustion 80 est donc alimentée en combustible par un deuxième lot de combustible sain et fiable, puisque ce combustible a été utilisé sans problème lors d'un vol précédent, ou a été testé spécifiquement au sol.

Dans le cas où l'alternateur principal 58 est en panne, l'alternateur auxiliaire 60, qui a été préalablement testé lors du démarrage de l'aéronef 10, est utilisé pour fonctionner en générateur de puissance électrique.

La rotation de l'arbre 50, engendrée par la combustion du deuxième lot de combustible dans la chambre 80 entraîne en rotation conjointe l'alternateur auxiliaire 60. Ceci engendre une quantité minimale de puissance électrique fournie au réseau électrique 20 de l'aéronef 10 par exemple comprise entre 6 kW et 50 kW. Les fonctions minimales de commande de vol et d'instrumentation de l'aéronef 10 sont ainsi assurées pour permettre à l'aéronef 10 de se poser.

Un faible débit de gaz, représenté par des flèches en pointillés sur la Figure 8 peut alors circuler entre le compresseur 54, la turbine 56, la cabine 24 et la soute 28.

La Figure 9 illustre un mode de maintenance de l'aéronef 10, réalisée au sol, dans lequel l'alternateur principal 58, et/ou l'alternateur auxiliaire 60 sont entraînés en rotation à partir de la combustion d'un combustible dans la chambre de combustion 80 indépendante du ou des moteurs 16A, 16B. Les alternateurs 58, 60 sont notamment testés dans ce mode pour vérifier leur bon fonctionnement.

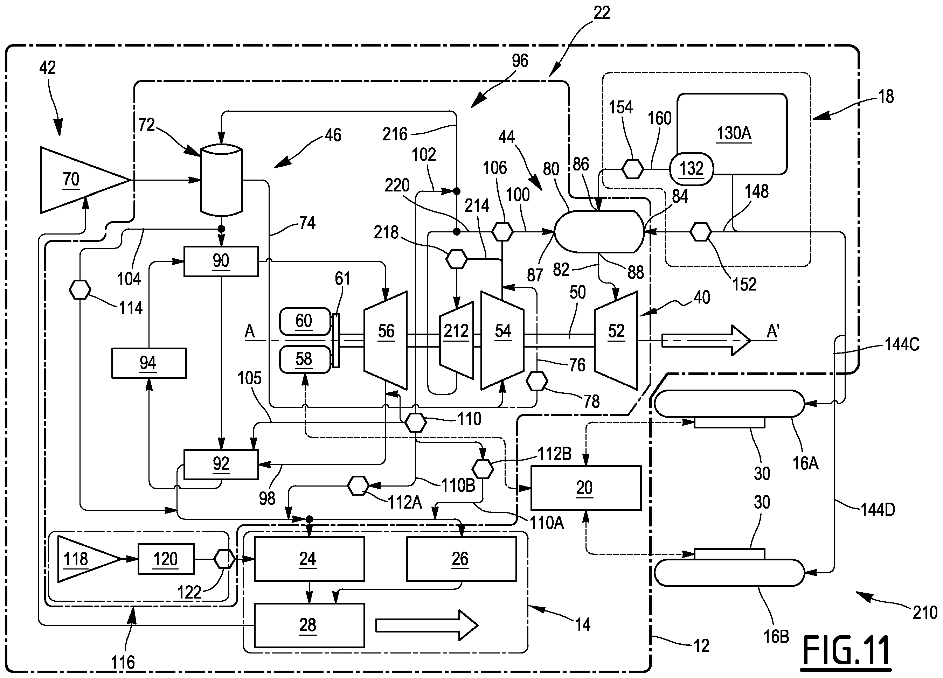

Un deuxième aéronef 210 selon l'invention est illustré par la Figure 11. A la différence du premier aéronef 10, l'ensemble rotatif 40 du système autonome 22 comporte, en plus du compresseur principal 54, un compresseur auxiliaire 212.

La conduite de convoyage 96 comporte ainsi un tronçon amont 214 raccordant le compresseur principal 54 au compresseur auxiliaire 212, et un tronçon aval 216 raccordant le compresseur auxiliaire 212 à l'échangeur thermique amont 72 et ensuite à la turbine froide 56.

Le tronçon amont 214 est muni d'une vanne amont 218 d'alimentation du compresseur auxiliaire 212.

A la différence du premier aéronef 10, la conduite de dérivation 100 d'air comprimé est piquée sur le tronçon amont 214, en amont de la vanne amont 218. Un piquage de retour 220 raccorde la vanne 106 de commande de la conduite de dérivation 100 au tronçon aval 216, pour réaliser une dérivation autour du compresseur aval 212.

La conduite de dérivation 102 est piquée sur le tronçon aval 216, en aval du compresseur auxiliaire 212, et en amont de l'échangeur amont 72.

Le système autonome 22 de génération et de conditionnement est par ailleurs analogue à celui du premier aéronef 10.

Le fonctionnement du système autonome 22 du deuxième aéronef 210 diffère du fonctionnement du système autonome 22 du premier aéronef 10 en ce que le courant de gaz comprimé obtenu à la sortie du compresseur principal 54, transite tout d'abord dans le tronçon amont 214, à travers la vanne amont 218 jusqu'au compresseur auxiliaire 212.

Une première partie du courant de gaz comprimé à une première pression dans le premier compresseur 54 est dérivée vers la chambre de combustion 80 à travers la conduite de dérivation 100 et la vanne de commande 106, en amont du compresseur auxiliaire 212.

Une deuxième partie du courant de gaz comprimé est ensuite recomprimée dans le compresseur auxiliaire 212 pour atteindre une pression supérieure à la pression du gaz obtenu à la sortie du compresseur principal 54.

Ensuite, le gaz comprimé issu du compresseur auxiliaire 212 est dirigé vers la turbine froide 54 à travers l'échangeur principal 72, l'échangeur thermique aval 90, le condenseur 92, le séparateur 94 et à nouveau l'échangeur thermique aval 90 comme décrit précédemment.

Dans une variante, le gaz comprimé issu de l'échangeur amont 72 est directement envoyé dans l'enceinte 14 par l'intermédiaire de la conduite de dérivation de gaz comprimé 104 et de la vanne de commande 114, sans passer par la turbine froide 56.

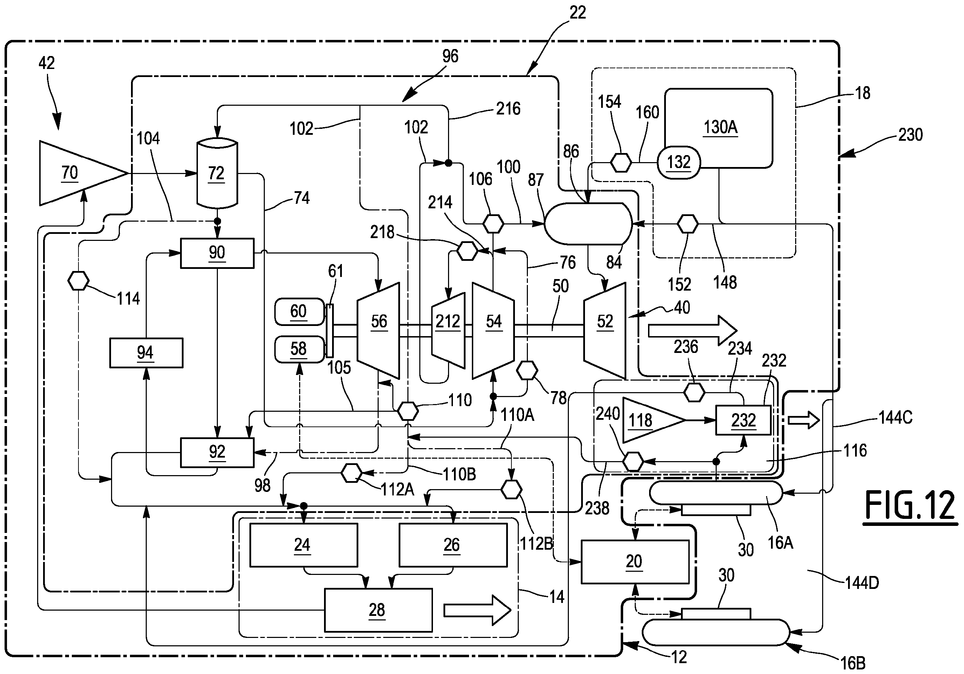

Un troisième aéronef 230 selon l'invention est illustré schématiquement par la Figure 12.

Le troisième aéronef 230 diffère du deuxième aéronef 210 en ce que l'ensemble auxiliaire de conditionnement 116 comporte un échangeur thermique de secours 232 remplaçant le réchauffeur 120. L'échangeur 232 est apte à mettre en relation d'échange thermique un courant de gaz chaud prélevé dans un moteur 16A de propulsion de l'aéronef avec un courant d'air extérieur prélevé à travers la prise d'air de secours 118.

Le courant d'air extérieur ainsi réchauffé est amené vers l'enceinte 14 par une conduite 234 d'amenée d'air froid de secours munie d'une vanne de commande 236 du débit d'air froid de secours.

En outre, l'ensemble auxiliaire 116 comporte une conduite 238 d'amenée d'air chaud issu d'un moteur 16A de propulsion de l'aéronef débouchant dans l'enceinte 14. La conduite 238 est munie d'une vanne 240 de commande du débit d'air chaud de secours envoyé vers l'enceinte 14.

En cas de défaillance du système autonome 22, de l'air froid est prélevé à travers la prise d'air de secours 118. Cet air froid est partiellement réchauffé dans l'échangeur de secours 232, avant d'être convoyé au moins partiellement vers l'enceinte 14 à travers la conduite 234 et la vanne 236.

De l'air chaud peut être également fourni pour équilibrer la température. Cet air chaud est directement prélevé dans le moteur de propulsion 16A de l'aéronef et est convoyé vers l'enceinte 14 à travers la conduite d'amenée d'air chaud 238 et la vanne de commande 240.

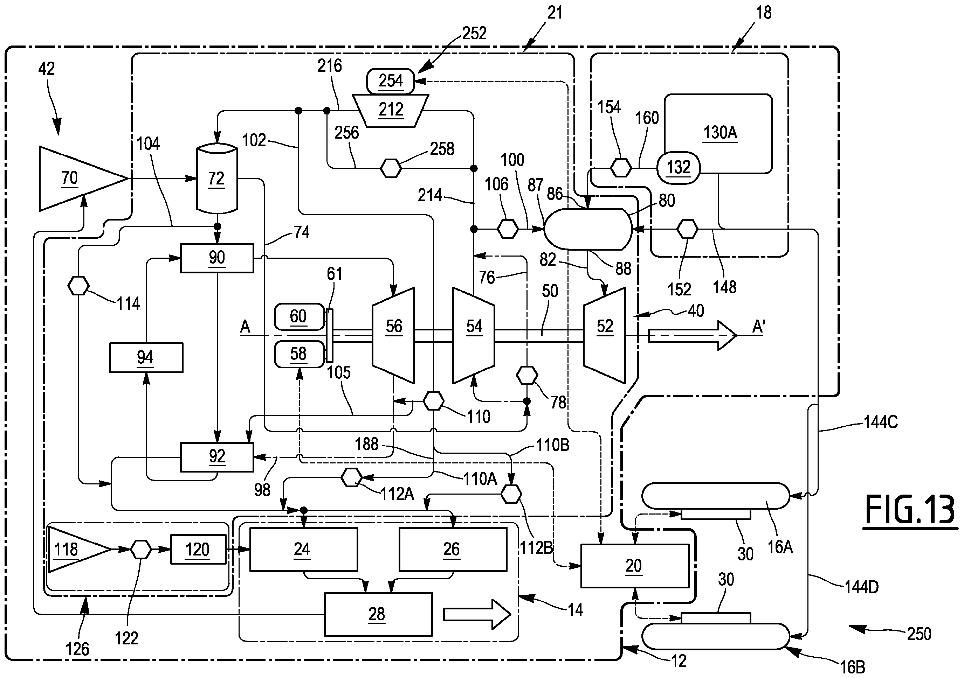

Un quatrième aéronef 250 selon l'invention est illustré par la Figure 13.

A la différence du deuxième aéronef 210 selon l'invention, l'ensemble rotatif 40 est dépourvu de compresseur auxiliaire.

L'ensemble de génération 22 comporte un module intermédiaire de compression 252 comportant un compresseur auxiliaire 212 entraîné de manière autonome par un moteur 254 indépendant mécaniquement de la turbine de puissance 52 et de la rotation de l'arbre 50.

Le moteur auxiliaire 254 est par exemple un moteur électrique entraîné en rotation par l'intermédiaire d'une puissance électrique fournie par le réseau électrique 20 de l'aéronef 250. En variante, le moteur 254 est alimenté par un gaz de combustion issu de la chambre de combustion 80.

Comme décrit précédemment, la conduite de convoyage 96 comprend un tronçon amont 214 s'étendant entre la sortie du compresseur principal 54 et l'entrée du compresseur auxiliaire 212 et un tronçon aval 216 s'étendant entre la sortie du compresseur auxiliaire 212 et l'entrée de la turbine froide 56.

Dans une variante avantageuse, une conduite de dérivation 256 du compresseur auxiliaire 212 est munie d'une vanne de dérivation 258 et raccorde un point en amont du compresseur auxiliaire 212 à un point situé en aval du compresseur auxiliaire 212.

Le fonctionnement du quatrième aéronef 250 diffère du fonctionnement du deuxième aéronef 210 en ce qu'une puissance électrique est fournie au moteur 254 par le réseau électrique 20 pour entraîner en rotation le compresseur auxiliaire 212 lorsque le compresseur principal 54 est entraîné en rotation par l'arbre 50 sous l'effet de la rotation de la turbine de puissance 52.

Dans une variante, le compresseur 54 est alimenté partiellement par un courant de gaz provenant d'un moteur de propulsion 16A, 16B, en plus de l'alimentation par l'air extérieur provenant de l'ensemble amont 42.

Grâce à l'invention qui vient d'être décrite, il est donc possible de disposer d'un système autonome 22 de génération de puissance électrique et de conditionnement, qui présente une structure compacte. Le système autonome 22 garantit une totale indépendance entre le fonctionnement thermodynamique du ou des moteurs de propulsion 16A, 16B de l'aéronef, la génération électrique nécessaire aux servitudes de l'aéronef, et le conditionnement du gaz présent dans l'enceinte 14 de l'aéronef.

Une telle disposition réduit significativement le poids et l'encombrement dans l'aéronef, tout en assurant une consommation minimale en combustible.

La présence d'un dispositif 18 de stockage de carburant selon l'invention muni d'un réservoir auxiliaire contenant un deuxième lot de combustible distinct du premier lot de combustible présent dans le réservoir principal 130A, 130B garantit une absence de contamination et une source d'énergie potentielle pour l'aéronef, notamment lorsque les moteurs 16A, 16B de l'aéronef sont inaptes à le propulser et à engendrer suffisamment d'énergie électrique.

Lorsque le dispositif 18 est utilisé en combinaison avec un alternateur auxiliaire 60 qui n'est pas utilisé en conditions normales de vol, mais qui est testé à chaque début de vol, l'aéronef dispose d'un système autonome 22 qui est apte à produire de manière particulièrement sûre une puissance électrique de secours palliant un défaut majeur du ou des moteurs 16A, 16B de propulsion comme décrit dans le mode de perte de génération électrique principale illustré par la Figure 8. Un tel système pourrait se substituer à un dispositif classique de production d'énergie de secours de type éolienne de secours ou « Run Air Turbine ». Ce système 22 présente une fiabilité significativement améliorée par rapport à un système RAT comprenant un système d'éolienne.

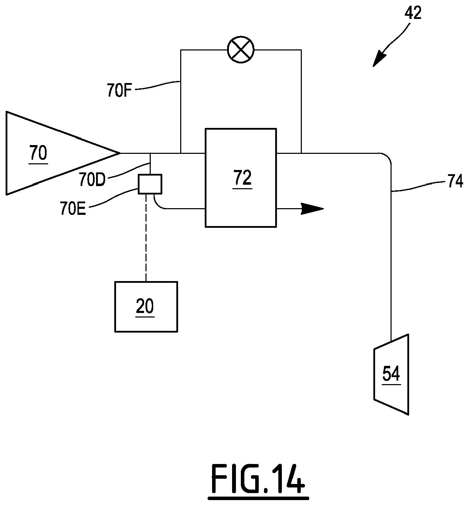

Dans une variante représentée sur la Figure 14, l'ensemble amont 42 de fourniture d'air comporte un piquage d'alimentation auxiliaire 70D de circulation d'air extérieur vers l'échangeur thermique amont 72. Le piquage 70D d'alimentation auxiliaire est piqué en amont de l'échangeur thermique amont 72 sur la conduite amont 74. Il traverse l'échangeur thermique amont 72. Il comporte, en amont ou en aval de l'échangeur thermique amont 72, un organe mobile d'entraînement d'air extérieur, tel qu'une hélice 70E. L'hélice 70E est alimentée électriquement par le réseau électrique de l'avion 20.

Cette disposition fournit une quantité suffisante d'air extérieur en circulation à travers l'échangeur 72, notamment lorsque l'aéronef 10 est à l'arrêt, ou au sol.

Dans cette disposition, une conduite additionnelle de dérivation 70F peut être prévue sur la conduite 74, pour contourner l'échangeur thermique 72 et alimenter directement le compresseur 54.

Dans des variantes, le système 22 est dépourvu de conduite 76, de conduite 102, de conduite 105 ou de piquage de retour 220. Il peut aussi être dépourvu d'ensemble auxiliaire 116.

Par « conduite », on entend généralement au sens de la présente invention, tout élément creux apte à convoyer un fluide entre deux points et pas nécessairement un élément tubulaire.

## Revendications

1. Système autonome (22) de génération de puissance électrique pour un aéronef, comprenant :
- une chambre de combustion (80), indépendante du ou de chaque moteur (16A, 16B) de propulsion de l'aéronef ;
- un dispositif (18) de stockage de combustible, comprenant :
- au moins un réservoir principal (130A, 130B), le ou chaque réservoir principal (130A, 130B) étant destiné à contenir un premier lot de combustible ;
- au moins une conduite (144C, 144D) d'alimentation d'un moteur (16A, 16B) de propulsion de l'aéronef avec le premier lot de combustible contenu dans le réservoir principal (130A, 130B) ;
le dispositif (18) comportant une première conduite (148) d'amenée de combustible destinée à convoyer dans la chambre de combustion (80) indépendante du ou de chaque moteur le premier lot de combustible contenu dans le réservoir principal (130A, 130B), la première conduite (148) débouchant dans ladite chambre de combustion (80) à travers une entrée principale (84);
le dispositif (18) comportant au moins un réservoir auxiliaire (132), destiné à contenir un deuxième lot de combustible, le réservoir auxiliaire (132) étant raccordé au réservoir principal (130A, 130B), le dispositif (18) comportant une conduite (160) d'amenée du deuxième lot de combustible contenu dans le réservoir auxiliaire (132) vers la chambre de combustion (80) de l'aéronef indépendante du ou de chaque moteur (16A, 16B) de l'aéronef, le deuxième lot de combustible étant distinct du premier lot de combustible, la conduite d'amenée (160) du deuxième lot de combustible raccordant le réservoir auxiliaire (132) à la chambre de combustion (80),
**caractérisé en ce que** la conduite d'amenée (160) du deuxième lot de combustible est configurée pour alimenter la chambre de combustion (80) exclusivement en combustible du deuxième lot présent dans le réservoir auxiliaire (132), sans être mélangé ou contaminé par le premier lot de combustible présent dans le réservoir principal (130A, 130B),
la conduite d'amenée (160) du deuxième lot de combustible débouchant dans la chambre de combustion (80) à travers une entrée secondaire (86) située à l'écart de l'entrée principale (84).

2. Système (22) selon la revendication 1, **caractérisé en ce que** le réservoir auxiliaire (132) est disposé à l'intérieur d'un réservoir principal (130A, 130B).

3. Système (22) selon l'une quelconque des revendications précédentes, **caractérisé en ce que** le dispositif (18) comporte une pompe (142) de transfert du premier lot de combustible vers le réservoir auxiliaire (132).

4. Système (22) selon l'une quelconque des revendications précédentes, **caractérisé en ce que** le dispositif (18) comporte une pompe auxiliaire (162) de secours, disposée sur la conduite d'amenée (160) du deuxième lot de combustible vers la chambre de combustion (80).

5. Système (22) selon l'une quelconque des revendications précédentes, **caractérisé en ce que** le réservoir principal (130A, 130B) contient un premier lot de combustible, le réservoir auxiliaire (132) contenant un deuxième lot de combustible avantageusement obtenu à partir du premier lot de combustible présent dans le réservoir principal (130A, 130B) lors d'un vol précédent de l'aéronef (10) ou à partir d'une source de combustible distincte de la source du premier lot de combustible.

6. Système (22) selon l'une quelconque des revendications précédentes, **caractérisé en ce que** le volume intérieur du réservoir auxiliaire (132) est inférieur à 15 % du volume intérieur du ou de chaque réservoir principal (130A, 130B).

7. Système (22) selon l'une quelconque des revendications précédentes, **caractérisé en ce qu'**il comporte une conduite d'amenée du premier lot de combustible, raccordant le réservoir principal (130A, 130B) à la chambre de combustion (80).

8. Système (22) selon la revendication 7, **caractérisé en ce qu'**il comporte :
- une turbine de puissance (52), propre à être entraînée en rotation par un gaz de combustion issu de la chambre de combustion (80) ;
- un arbre (50), entraîné en rotation par la turbine de puissance (52) ;
- au moins un alternateur (58, 60) propre à être entraîné en rotation par l'arbre rotatif (50) pour engendrer une puissance électrique lors de la rotation de l'arbre rotatif (50).

9. Système (22) selon la revendication 7 ou 8, **caractérisé en ce que** l'arbre rotatif (50) est raccordé mécaniquement à un alternateur principal (58) et à un alternateur auxiliaire (60).

10. Système (22) selon l'une quelconque des revendications précédentes, **caractérisé en ce qu'**il comporte un compresseur (54) et une turbine froide (56) montés sur l'arbre rotatif (50), le compresseur (54) et la turbine froide (56) étant raccordés à une enceinte (14) destinée à être conditionnée.

11. Méthode de gestion du combustible dans un aéronef comportant un système (22) selon l'une quelconque des revendications précédentes, **caractérisé en ce qu'**il comprend les étapes suivantes :
- après une première phase de vol de l'aéronef, transfert d'un lot de combustible contenu dans le réservoir principal (130A, 130B) vers le réservoir auxiliaire (132) pour former un deuxième lot de combustible contenu dans le réservoir auxiliaire (132) ;
- remplissage au sol du réservoir principal (130A, 130B) par un nouveau lot de combustible, pour former un premier lot de combustible contenu dans le réservoir principal (130A, 130B), sans remplir le réservoir auxiliaire (132) avec le nouveau lot de combustible.

12. Méthode selon la revendication 11, **caractérisée en ce que** lors d'une deuxième phase de vol de l'aéronef postérieure à l'étape de remplissage, le premier lot de combustible est convoyé hors du réservoir principal (130A) pour alimenter un moteur de propulsion (16A, 16B) de l'aéronef.

13. Méthode selon la revendication 12, **caractérisée en ce que** lors d'une phase de vol, le deuxième lot de combustible est convoyé hors du réservoir auxiliaire (132) pour alimenter une chambre de combustion (80) indépendante du ou de chaque moteur de propulsion (16A, 16B) de l'aéronef.

14. Méthode selon la revendication 13, **caractérisé en ce qu'**il comporte les étapes suivantes.
- combustion du deuxième lot de combustible dans la chambre de combustion (80) indépendante du ou de chaque moteur de propulsion de l'aéronef (16A, 16B) ;
- entraînement en rotation d'une turbine de puissance (52) par un gaz de combustion issu de la chambre de combustion (80) ;
- génération de puissance électrique par un alternateur (60) couplé en rotation avec la turbine de puissance (52).

## Patentansprüche

1. Autonomes System (22) zur Erzeugung von elektrischer Leistung für ein Luftfahrzeug, aufweisend:
- eine Brennkammer (80), die unabhängig von einem oder jedem Antrieb (16A, 16B) zum Antreiben des Luftfahrzeugs ist;
- eine Vorrichtung (18) zur Speicherung von Treibstoff, aufweisend:
- wenigstens einen Haupttank (130A, 130B), wobei der oder jeder Haupttank (130A, 130B) dazu eingerichtet ist, eine erste Treibstoffmenge zu beinhalten,
- wenigstens eine Leitung (144C, 144D) zur Versorgung eines Antriebs (16A, 16B) zum Antreiben des Luftfahrzeugs mit der ersten Treibstoffmenge, die in dem Haupttank (130A, 130B) enthalten ist,
wobei die Vorrichtung (18) eine erste Leitung (148) zur Zufuhr des Treibstoffs, die zum Transport der ersten Treibstoffmenge, die in dem Haupttank (130A, 130B) enthalten ist, in die Brennkammer (80), die unabhängig von dem oder jedem Antrieb ist, eingerichtet ist, aufweist, wobei die erste Leitung (148) über einen Haupteinlass (84) in die Brennkammer (80) mündet,
wobei die Vorrichtung (18) wenigstens einen Hilfstank (132), der dazu eingerichtet ist, eine zweite Treibstoffmenge zu enthalten, aufweist, wobei der Hilfstank (132) mit dem Haupttank (130A, 130B) verbunden ist, wobei die Vorrichtung (18) eine Leitung (160) zur Zufuhr der zweiten Treibstoffmenge, die in dem Hilfstank (132) enthalten ist, in Richtung zur Brennkammer (80) des Luftfahrzeugs, die unabhängig von dem oder jedem Antrieb (16A, 16B) des Luftfahrzeugs ist, aufweist, wobei die zweite Treibstoffmenge von der ersten Treibstoffmenge verschieden ist, wobei die Leitung zur Zufuhr (160) der zweiten Treibstoffmenge den Hilfstank (132) mit der Brennkammer (80) verbindet,
**gekennzeichnet dadurch, dass** die Leitung zur Zufuhr (160) der zweiten Treibstoffmenge dazu eingerichtet ist, die Brennkammer (80) ausschließlich mit Treibstoff der zweiten Menge, die in dem Hilfstank (132) vorliegt, ohne Vermischung oder Kontaminierung durch die erste Treibstoffmenge, die in dem Haupttank (130A, 130B) vorliegt, zu versorgen,
wobei die Leitung zur Zufuhr (160) der zweiten Treibstoffmenge über einen Sekundäreinlass (86), der vom Haupteinlass (84) im Abstand angeordnet ist, in die Brennkammer (80) mündet.

2. System (22) gemäß Anspruch 1, **gekennzeichnet dadurch, dass** der Hilfstank (132) im Inneren eines Haupttanks (130A, 130B) angeordnet ist.

3. System (22) gemäß irgendeinem der vorhergehenden Ansprüche, **gekennzeichnet dadurch, dass** die Vorrichtung (18) eine Pumpe (142) zum Fördern der ersten Treibstoffmenge in Richtung zum Hilfstank (132) aufweist.

4. System (22) gemäß irgendeinem der vorhergehenden Ansprüche, **gekennzeichnet dadurch, dass** die Vorrichtung (18) eine Not-Hilfspumpe (162) aufweist, die an der Leitung zur Zufuhr (160) der zweiten Treibstoffmenge in Richtung zur Brennkammer (80) angeordnet ist.

5. System (22) gemäß irgendeinem der vorhergehenden Ansprüche, **gekennzeichnet dadurch, dass** der Haupttank (130A, 130B) eine erste Treibstoffmenge aufweist, wobei der Hilfstank (132) eine zweite Treibstoffmenge aufweist, welche vorteilhafterweise aus der ersten Treibstoffmenge, die in dem Haupttank (130, 130B) bei einem vorhergehenden Flug des Luftfahrzeugs (10) vorliegt, oder aus einer Treibstoffquelle, die von der Quelle der ersten Treibstoffmenge verschieden ist, erhalten wird.

6. System (22) gemäß irgendeinem der vorhergehenden Ansprüche, **gekennzeichnet dadurch, dass** das Innenvolumen des Hilfstanks (132) geringer als 15% des Innenvolumens des oder jedes Haupttanks (130A, 130B) ist.

7. System (22) gemäß irgendeinem der vorhergehenden Ansprüche, **gekennzeichnet dadurch, dass** es eine den Haupttank (130A, 130B) mit der Brennkammer (80) verbindende Leitung zur Zufuhr der ersten Treibstoffmenge aufweist.

8. System (22) gemäß Anspruch 7, **gekennzeichnet dadurch, dass** es aufweist:
- eine Leistungsturbine (52), die geeignet ist, durch ein aus der Brennkammer (80) stammendes Verbrennungsgas in Rotation versetzt zu werden;
- eine Welle (50), welche durch die Leistungsturbine (52) in Rotation versetzt wird;
wenigsten einen Generator (58, 60), der geeignet ist, durch die drehbare Welle (50) in Rotation versetzt zu werden, um eine elektrische Leistung bei der Rotation der drehbaren Welle (50) zu erzeugen.

9. System (22) gemäß dem Anspruch 7 oder 8, **gekennzeichnet dadurch, dass** die drehbare Welle (50) mechanisch mit einem Hauptgenerator (58) und einem Hilfsgenerator (60) verbunden ist.

10. System (22) gemäß irgendeinem der vorhergehenden Ansprüche, **gekennzeichnet dadurch, dass** es einen Verdichter (54) und eine kalte Turbine (56), die an der drehbaren Welle (50) angebracht sind, aufweist, wobei der Verdichter (54) und die kalte Turbine (56) mit einem abgeschlossenen Raum (14), der dazu vorgesehen ist, konditioniert zu werden, verbunden sind.

11. Verfahren zur Verwaltung von Treibstoff in einem Luftfahrzeug, welches ein System (22) gemäß irgendeinem der vorhergehenden Ansprüche aufweist, **gekennzeichnet dadurch, dass** es die folgenden Schritte aufweist:
- nach einer ersten Phase des Flugs des Luftfahrzeugs, Fördern von einer in dem Haupttank (130A, 130B) enthaltenen Treibstoffmenge in Richtung zum Hilfstank (132) um eine zweite, in dem Hilfstank (132) enthaltene Treibstoffmenge zu bilden;
- Befüllen des Haupttanks (130A, 130B) auf dem Boden mittels einer neuen Treibstoffmenge, um eine erste, in dem Haupttank (130A, 130B) enthaltene Treibstoffmenge zu bilden, ohne den Hilfstank (132) mit der neuen Treibstoffmenge zu befüllen.

12. Verfahren gemäß Anspruch 11, **gekennzeichnet dadurch, dass** bei einer zweiten Phase des Flugs des Luftfahrzeugs nach dem Schritt des Befüllens die erste Treibstoffmenge aus dem Haupttank (130A) zum Versorgen eines Antriebs zum Antreiben (16A, 16B) des Luftfahrzeugs gefördert wird.

13. Verfahren gemäß Anspruch 12, **gekennzeichnet dadurch, dass** bei einer Phase des Flugs die zweite Treibstoffmenge aus dem Hilfstank (132) zum Versorgen einer Brennkammer (80), die von dem oder jedem Antrieb zum Antreiben (16A, 16B) des Luftfahrzeugs unabhängig ist, gefördert wird.

14. Verfahren gemäß Anspruch 13, **gekennzeichnet dadurch, dass** es die folgenden Schritte aufweist:
- Verbrennen der zweiten Treibstoffmenge in der Brennkammer (80), die von dem oder jedem Antrieb zum Antreiben des Luftfahrzeugs (16A, 16B) unabhängig ist;
- Rotationsantreiben einer Leistungsturbine (52) mittels eines aus der Brennkammer (80) stammenden Verbrennungsgases;
- Erzeugen von elektrischer Leistung mittels eines mit der Leistungsturbine (52) drehverbundenen Generators (60).

## Claims

1. An autonomous electric power production system (22) for an aircraft, comprising:
- a combustion chamber (80), independent of the or each propulsion engine (16A, 16B) of the aircraft;
- a fuel storage device (18) comprising:
- at least one main reservoir (130A, 130B), the or each main reservoir (130A, 130B) being designed to contain a first batch of fuel;
- at least one feed line (144C, 144D) for supplying a propulsion engine (16A, 16B) of the aircraft with the first batch of fuel contained in the main reservoir (130A, 130B);
the device (18) comprising a first fuel intake line (148) intended to convey, into the into the combustion chamber (80) independent of the or each propulsion engine (16A, 16B), the first batch of fuel present in the main reservoir (130A, 130B), the first line (148) emerging in the combustion chamber (80) through a main inlet (84);
the device (18) comprising at least one auxiliary reservoir (132), designed to contain a second batch of fuel, the auxiliary reservoir (132) being connected to the main reservoir (130A, 130B), the device (18) comprising an intake line (160) for bringing the second batch of fuel contained in the auxiliary reservoir (132) toward the combustion chamber (80) independent of the or each engine (16A, 16B) of the aircraft;
the second batch of fuel being distinct from the first batch of fuel; the intake line (160) of the second batch of fuel connecting the auxiliary reservoir (132) to the combustion chamber (80)
**characterized in that** the intake line (160) of the second batch of fuel is configured to supply the combustion chamber (80) exclusively with fuel from the second batch present in the auxiliary reservoir (132), without being mixed with or contaminated by the first batch of fuel present in the main reservoir (130A, 130B);
the intake line (160) of the second batch of fuel emerging into the combustion chamber (80) through a secondary inlet (86), located at a distance from the main inlet (84).

2. The system (22) according to claim 1, **characterized in that** the auxiliary reservoir (132) is positioned inside a main reservoir (130A, 130B).

3. The system (22) according to any one of the preceding claims, **characterized in that** the device (18) comprises a transfer pump (142) for transferring the first batch of fuel toward the auxiliary reservoir (132).

4. The system (22) according to any one of the preceding claims, **characterized in that** the device (18) comprises a backup auxiliary pump (162), positioned on the intake line (160) for bringing the second batch of fuel toward the combustion chamber (80).

5. The system (22) according to any one of the preceding claims, **characterized in that** the main reservoir (130A, 130B) contains a first batch of fuel, the auxiliary reservoir (132) containing a second batch of fuel advantageously obtained from the first batch of fuel present in the main reservoir (130A, 130B) during a preceding flight of the aircraft (10) or from a fuel source distinct from the source of the first batch of fuel.

6. The system (22) according to any one of the preceding claims, **characterized in that** the inner volume of the auxiliary reservoir (132) is less than 15% of the inner volume of the or each main reservoir (130A, 130B).

7. The system (22) according any one of the preceding claims, **characterized in that** it comprises an intake line for the first batch of fuel, connecting the main reservoir (130A, 130B) to the combustion chamber (80).

8. The system (22) according to claim 7, **characterized in that** it comprises:
- a power turbine (52), capable of being rotated by a combustion gas coming from the combustion chamber (80);
- a shaft (50), rotated by the power turbine (52);
- at least one alternator (58, 60) capable of being rotated by the rotary shaft (50) to create electricity during the rotation of the rotary shaft (50).

9. The system (22) according to claim 7 or 8, **characterized in that** the rotary shaft (50) is mechanically connected to a main alternator (58) and an auxiliary alternator (60).

10. The system (22) according to any one of the preceding claims, **characterized in that** it comprises a compressor (54) and a cold turbine (56) mounted on the rotary shaft (50), the compressor (54) and the cold turbine (56) being connected to an enclosure (14) intended to be conditioned.

11. A method for managing fuel in an aircraft comprising a system (22) according to any one of the preceding claims, **characterized in that** it includes the following steps:
- after first flight phase of the aircraft, transferring a batch of fuel contained in the main reservoir (130A, 130B) toward the auxiliary reservoir (132) to form a second batch of fuel contained in the auxiliary reservoir (132);
- on the ground, filling the main reservoir (130A, 130B) with a new batch of fuel, to form a first batch of fuel contained in the main reservoir (130A, 130B), without filling the auxiliary reservoir (132) with the new batch fuel.

12. The method according to claim 11, **characterized in that** during a second flight phase of the aircraft after the filling step, the first batch of fuel is conveyed outside the main reservoir (130A) to supply a propulsion engine (16A, 16B) of the aircraft.

13. The method according to claim 12, **characterized in that** during a flight phase, the second batch of fuel is conveyed outside the auxiliary reservoir (132) to supply a combustion chamber (80) independent of the or each propulsion engine (16A, 16B) of the aircraft.

14. The method according to claim 13, **characterized in that** it comprises the following steps:
- combustion of the second batch of fuel in the combustion chamber (80) independent of the or each propulsion engine of the aircraft (16A, 16B);
- rotation of a power turbine (52) by a combustion gas coming from the combustion chamber (80);
- electricity production by an alternator (60) rotationally coupled with the power turbine (52).
